# EUROPÄISCHE PATENTSCHRIFT

(11) **EP 3 101 773 B1**
(45) Veröffentlichungstag und Bekanntmachung des Hinweises auf die Patenterteilung: **18.11.2020**
(21) Anmeldenummer: 16171942.2
(22) Anmeldetag: 30.05.2016
(51) Int. Cl.: H02J 9/06, H02J 7/00, H01M 10/42

(54) **MOBILES ENERGIEVERSORGUNGSGERÄT**
MOBILE ENERGY SUPPLY APPARATUS
APPAREIL MOBILE D'ALIMENTATION EN ENERGIE

(30) Priorität: 01.06.2015 DE 102015108603
(43) Veröffentlichungstag der Anmeldung: 07.12.2016
(73) Patentinhaber: H-Tech AG, 9494 Schaan (LI)
(72) Erfinder: Tschiggfrei, Peter, 6807 Tisis (AT); Skala, Gerd, 6820 Frastanz (AT)
(74) Vertreter: Ter Meer Steinmeister & Partner

(56) Entgegenhaltungen:
- WO-A1-2009/146287
- WO-A1-2011/096863
- DE-A1-102007 059 805
- US-A1- 2005 031 945
- US-A1- 2012 112 544
- US-A1- 2012 114 997

## Beschreibung

Die Erfindung betrifft ein mobiles Energieversorgungsgerät auf Batteriebasis, welches wenigstens einen Batterieblock und eine Anpassungsschaltung enthält, um eine Versorgung mit elektrischer Energie in Bereichen zu ermöglichen, an denen keine Stromversorgung vorhanden ist.

Die Versorgung mit elektrischer Energie nimmt weiter an Bedeutung zu. Auch wenn dazu der Ausbau von elektrischen Stromversorgungsnetzen immer weiter voranschreitet, gibt es viele Bereiche, in denen bisher keine Stromversorgungsnetze vorhanden sind und in denen trotzdem die Versorgung mit elektrischer Energie wenigstens kurzzeitig erforderlich ist. Außerdem können Situationen entstehen, in denen die elektrischen Stromversorgungsnetzwerke ausfallen und eine kurzfristige Überbrückung der elektrischen Stromversorgung notwendig ist. Bisher wurden für solche Fälle als mobile Energieversorgungsgeräte Aggregate eingesetzt, die als Notstromaggregate verwendet werden. Diese weisen den Nachteil auf, dass sie Abgase produzieren und einen hohen Geräuschpegel aufweisen, so dass der Einsatz derartiger Aggregate, meistens Dieselaggregate, nicht in allen Situationen möglich ist. Darüber hinaus sind derartige Dieselaggregate sehr schwer und weisen große Abmessungen auf.

Der Einsatz von Batterien oder Akkus für eine elektrische Stromversorgung ist bisher nur für sehr kleine elektrische Verbraucher bekannt. Insbesondere für elektrische Maschinen, die einen Wechselstrom erfordern, sind bisher keine mobilen Energieversorgungsgeräte auf Batteriebasis bekannt, die über entsprechende Leistungen bzw. Energiemengen verfügen, die einen Betrieb von derartigen elektrischen Maschinen erlauben.

Vor diesem Hintergrund ergibt sich die Aufgabe ein mobiles Energieversorgungsgerät anzugeben, welches elektrische Energie auch in Bereichen zur Verfügung stellt, in denen keine elektrischen Stromversorgungsnetze vorhanden sind, wobei das mobile Energieversorgungsgerät ein handhabbares Gewicht aufweist, ausreichend robust für den Einsatz im Außenbereich ist und weder Abgase noch Geräusche erzeugt. US 2012/112544 A1 offenbart ein tragbares Stromversorgungssystem mit einem Gehäuse, einer Batterie, die innerhalb des Gehäuses befestigt ist, und einem Batterieladegerät, das innerhalb des Gehäuses befestigt ist. Das Batterieladegerät ist mit dem Akku elektrisch verbunden, um den Akku aufzuladen. Das System umfasst ferner einen Wechselrichter, der innerhalb des Gehäuses befestigt ist. Der Wechselrichter ist elektrisch mit der Batterie verbunden und ist so konfiguriert, dass er einen von der Batterie gelieferten Gleichstrom in einen Wechselstrom umwandelt. Das System umfasst ferner eine Steckdose mit mindestens einer elektrischen Haushaltsverbindung.

WO 2009/146287 A1 offenbart ein tragbares Energiespeicher- und Versorgungssystem mit einer Einrichtung zum Laden und Entladen. Das System umfasst einen Wechselrichter, ein oder mehrere Batteriemodule und Steuerungsmittel zur Steuerung der Lade- und Entladefunktionen.

DE 10 2007 059805 A1 offenbart einen Batteriepack für Elektrofahrzeuge oder Fahrzeuge mit Elektrohybridantrieb.

Die Aufgabe wird durch die Merkmale der unabhängigen Ansprüche gelöst.

Die Erfindung basiert auf dem Grundgedanken eine vorbestimmte Anzahl wiederaufladbarer Batterien in einem Gehäuse derart anzuordnen, dass sie eine ausreichende Leistung über eine vorbestimmte Zeit zur Verfügung stellen, die an eine Anpassungsschaltung in Form eines Wechselrichters geliefert wird, der die von der vorbestimmten Anzahl von Batterien zugeführte Spannung in ein Spannungsformat ändert, welches von externen Abnehmern gefordert wird. Dazu weist das Gehäuse einerseits ein erstes Anschlussterminal auf, das mit der Ausgangsseite der Anpassungsschaltung verbunden ist und zur Ausgabe einer Wechselspannung vorgesehen ist.

Das mobile Energieversorgungsgerät weist darüber hinaus ein zweites Anschlussterminal auf, welches mit der vorbestimmten Anzahl der Batterien verschaltet ist. Über dieses zweite Anschlussterminal lassen sich die im mobilen Energieversorgungsgerät vorhandenen Batterien laden, in dem ihnen von Außen eine Spannung zugeführt wird. Das mobile Energieversorgungsgerät weist darüber hinaus eine Schaltvorrichtung auf, die ein Einschalten und Ausschalten des mobilen Energieversorgungsgeräts ermöglicht.

Die vorbestimmte Anzahl von Batterien ist in einem Batterieblock verschaltet, der eine raumoptimierte Anordnung von Batterien ermöglicht, so dass eine vorbestimmte Leistung über eine vorbestimmte Zeit durch den Batterieblock und den darin enthaltenen Batterien zur Verfügung gestellt werden kann. Durch die Unterbringung des Batterieblocks und des Wechselrichters bzw. der elektrischen Schaltungselemente in einem stabilen Gehäuse ist es möglich, ein mobiles Energieversorgungsgerät bereitzustellen, welches auch unter Wetter-, und Stoß- und Schütteleinflüssen sicher eine elektrische Stromversorgung wenigstens für einen vorbestimmten Zeitraum zur Verfügung stellen kann.

Der Einsatz eines erfindungsgemäßen mobilen Energieversorgungsgeräts auf Batteriebasis ist insbesondere für Hilfs- und Rettungskräfte vorteilhaft, da bei einem Notfall, beispielweise einem Erdbeben häufig die elektrische Energieversorgung über das Stromversorgungsnetzwerk ausgefallen ist und ein schneller Einsatz von elektrischen Geräte hilfreich ist. Die Verwendung von herkömmlichen Dieselaggregaten in derartigen Fällen ist aufwendig, da die Dieselaggregate an entlegene Stellen transportiert werden müssen, und darüber hinaus auch mit Dieselkraftstoff befüllt werden müssen, so dass in einem derartigen Katastrophenfall die Verwendung von Dieselaggregaten nur bedingt möglich ist.

Das mobile Energieversorgungsgerät weist ein Ladegerät auf, welches zur Anpassung einer von außen zugeführten Spannung vorgesehen ist, und beispielsweise die von außen zugeführte Spannung anhebt, bzw. absenkt und darüber hinaus den Ladevorgang des Batterieblocks im mobilen Energieversorgungsgerät steuert.

Das Ladegerät kann in die Anpassungsschaltung integriert sein, wodurch das Innvolumen des mobilen Energieversorgungsgeräts weiter optimiert genutzt werden kann, so dass entweder ein kleineres Gehäuse verwendet werden kann oder ein bestehendes Gehäuse mit mehr Batterien bestückt werden kann, um somit eine höhere Leistung und Energie bereitzustellen.

Das mobiles Energieversorgungsgerät weist dazu auf: ein Gehäuse zur Aufnahme eines Batterieblocks und einer Anpassungsschaltung, ein erstes Anschlussterminal, das mit der Anpassungsschaltung verbunden ist und zur Ausgabe einer Spannung eingerichtet ist, die an den Verbraucher angepasst ist, ein zweites Anschlussterminal, das mit dem Batterieblock verbunden ist und für den Empfang einer Spannung eingerichtet ist sowie eine Schaltvorrichtung, zum Ein- oder Ausschalten des mobilen Energieversorgungsgeräts.

Das Ladegerät ist insbesondere zur Anpassung der über das zweite Anschlussterminal zugeführten Spannung und zur Steuerung eines Ladevorgangs des Batterieblocks vorgesehen.

Vorzugsweise kann das mobile Energieversorgungsgerät ein Trennrelais enthalten, das zwischen den Batterieblock und die Anpassungsschaltung geschaltet ist und abhängig vom Schaltzustand der Schaltvorrichtung die Verbindung zwischen Batterieblock und der Anpassungsschaltung herstellt oder unterbricht.

Das Trennrelais kann dazu einen Schalter umfassen, der in die Zuleitung vom Batterieblock zur Anpassungsschaltung geschaltet ist und einen Schaltkontakt der basierend auf einem Einschaltsignal den Schalter schließt und bei einem Ausschaltsignal den Schalter öffnet.

Um einen sichereren Betreib zu gewährleisten ist im Gehäuse wenigstens ein Batteriemanagementsystem verbaut, welches mit dem Batterieblock gekoppelt ist und den Lade- und/oder Entladevorgang des Batterieblocks überwacht und steuert.

Darüber hinaus kann wenigstens eine Sicherung vorhanden sein, die zwischen Batterieblock und die Anpassungsschaltung geschaltet ist und bei einem Stromfluss über einem vorherbestimmten Stromwert die Zuleitung zur Anpassungsschaltung unterbricht.

Die Anpassungsschaltung ist als Wechselrichter ausgestaltet der eine Gleichspannung empfängt und in eine Wechselspannung wandelt. Der Wechselrichter gibt eine Sinuswechselspannung aus. Vorzugsweise werden 230 V bzw. 110 V ausgegeben, die den jeweiligen Standardspannungen in den Einsatzregionen angepasst sind.

Um den Benutzer über den Zustand des mobilen Energieversorgungsgeräts zu informieren ist eine Betriebsanzeigevorrichtung zur Anzeige wenigstens eines Betriebsstatus des mobilen Energieversorgungsgeräts enthalten. Diese kann an einer Außenseite des Gehäuses angeordnet sein, um eine gute Sichtbarkeit zu gewährleisten.

Der im mobilen Energieversorgungsgerät enthaltene Batterieblock ist aus mehreren Batteriepacks zusammengesetzt. Dabei umfasst ein Batteriepack wenigstens zwei Batteriezellen, wobei jede Batteriezelle einen positiven und einen negativen elektrischen Anschlusskontakt aufweist, die an gegenüberliegenden Seiten der Batteriezelle angeordnet sind, wobei die elektrisch positiven Anschlusskontakte der Batteriezellen mit einer ersten Anschlussstruktur und die elektrisch negativen Anschlusskontakte der Batteriezellen mit einer zweiten Anschlussstruktur verbunden sind, wobei die erste und die zweite Anschlussstruktur auf gegenüberliegenden Seiten des Batteriepacks angeordnet sind, und jede Anschlussstruktur eine Stromfestigkeit aufweist, die der Summe der Einzelströme jeder angeschlossenen Batteriezelle entspricht, wobei jede Batteriezelle über wenigstens ein Anschlusselement mit der ersten Anschlussstruktur und über wenigstens ein weiteres Anschlusselement mit der zweiten Anschlussstruktur verbunden ist, wobei ein Querschnitt des jeweiligen Anschlusselements an einen vorbestimmten Maximalstrom einer Batteriezelle angepasst ist.

Um eine sichere elektrische Verbindung zwischen der Anschlussstruktur und den Batteriezellen zu gewährleisten, sind die Anschlusselemente jeweils an einer den Batteriezellen zugewandten Seite der Anschlussstruktur befestigt.

Die wenigstens zwei Batteriezellen sind in einer Parallelschaltung verschaltet, bei der jeweils positive und negative elektrische Anschlusskontakte je einer Anschlussstruktur zugeordnet sind.

Jede Anschlussstruktur ist aus einem elektrisch leitenden Material hergestellt und flächig ausgebildet, um eine gleichmäßige Stromverteilung zu allen angeschlossenen Batteriezellen zu ermöglichen.

Der Batterieblock kann vorzugsweise wenigstens zwei Batteriepacks umfassen, wobei jedes Batteriepack wenigstens zwei Batteriezellen umfasst, und jeder elektrischen Anschlussseite eines Batteriepacks eine Anschlussstruktur zugeordnet ist, wobei die elektrisch entgegensetzt gepolten Anschlussstrukturen von zwei benachbarten Batteriepacks aneinander liegen, um eine großflächige Verbindung zwischen den Batteriepacks zu bilden. Die Batteriepacks sind dann in Serie geschaltet.

Das erste und zweite Anschlussterminal, die Schaltvorrichtung und die Betriebsanzeigevorrichtung können an einer Außenseite des Gehäuses angeordnet sein.

In einer besonderen Ausgestaltung können dem Energieversorgungsgerät Photovoltaikelemente zugeordnet sein, die bei Lichteinfall eine Spannung erzeugen und die dem Ladegerät und/oder dem Batterieblock zugeführt wird. Solche Elemente können am Gehäuse befestigt werden oder verbunden mit einer Zuleitung separat vom Gehäuse angeordnet sein.

Durch die Verwendung von Batteriezellen auf Lithiumbasis weist der Batterieblock eine Leistung grösser 1,0 kW und eine Energie grösser 2kWh auf.

Vorzugsweise kann das Gehäuse Rollen aufweisen, um das mobile Energieversorgungsgerät rollend zu transportieren. Ebenso kann das Gehäuse einen Tragegriff aufweisen, um einen Transport zu erleichtern. Dieser kann ausziehbar sein.

In einer beispielhaften Ausgestaltung, weist jedes Batteriepack 60 Batteriezellen auf, und hat somit eine Energie von 650 Wh. Wenn 7 deartige Batteriepacks zu einem Batterieblock zusammengefügt werden, ergibt das eine Energie von 4550 Wh für den gesamten Batterieblock.

Im Folgenden werden Figuren des mobilen Energieversorgungsgeräts näher erläutert.
Fig. 1 zeigt schematisch die Komponenten eines mobilen Energieversorgungsgeräts;
Fig. 2 zeigt die interne Verschaltung der Komponenten innerhalb des mobilen Energieversorgungsgeräts;
Fig. 3 zeigt einen erfindungsgemäßen Batterieblock;
Fig. 4 zeigt den Aufbau eines Batteriepacks;
Fig. 5a, 5b zeigen verschiedene Gehäuseformen des mobilen Energieversorgungsgeräts;

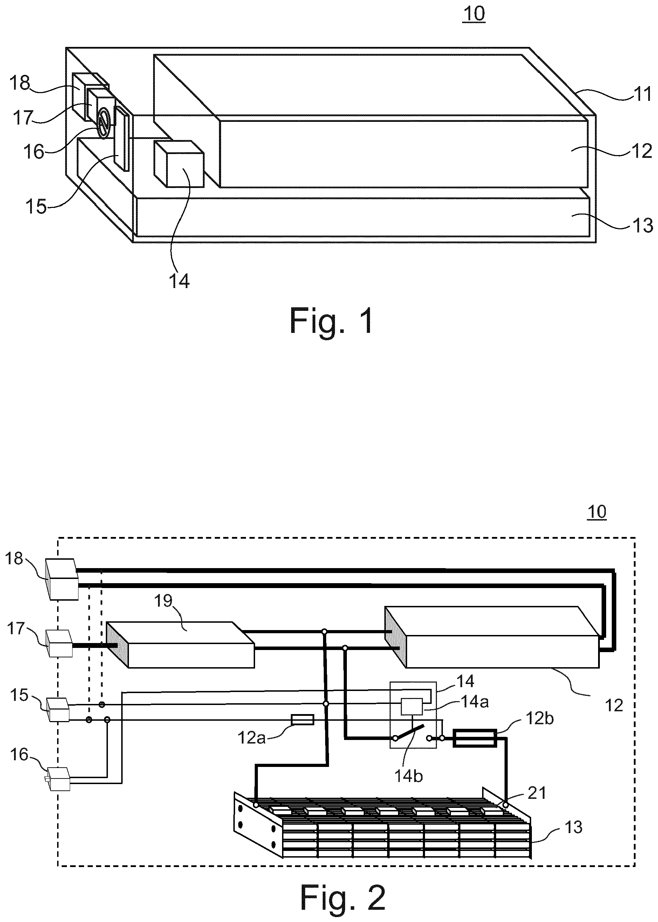

Fig. 1 zeigt eine schematische Ansicht der Komponenten eines mobilen Energieversorgungsgeräts 10, welches ein stabiles und stoßfestes Gehäuse 11 aufweist. Das Gehäuse 11 enthält eine Anpassungsschaltung 12, vorzugsweise als Wechselrichter realisiert, und einen Batterieblock 13. Weitere Bestandteile des mobilen Energieversorgungsgeräts 10 sind ein Trennrelais 14, mit dem die elektrischen Komponenten innerhalb des mobilen Energieversorgungsgeräts 10 vollständig voneinander entkoppelt werden können. An einer Außenseite des Gehäuses 11 ist eine Schaltvorrichtung 16 angeordnet, mit der das mobile Energieversorgungsgerät 10 ein- und ausgeschaltet werden kann. Weiter ist ein erstes Anschlussterminal 18 und ein zweites Anschlussterminal 17 vorhanden. Vorzugsweise weist das Gehäuse 11 auch eine Betriebsanzeigevorrichtung 15 auf, über die wenigstens ein Betriebsstatus des mobilen Energieversorgungsgeräts 10 anzeigbar ist.

Figur 2 zeigt die interne Verschaltung der Komponenten innerhalb des mobilen Energieversorgungsgeräts 10. Der Batterieblock 13 besteht aus mehreren Batteriepacks, denen jeweils ein Batteriemanagementsystem 21 zugeordnet ist.

Der Aufbau des Batterieblocks 13 wird im Folgenden beschrieben. Der Batterieblock 13 ist über elektrische Verbindungen mit der Anpassungsschaltung 12 (Wechselrichter) verbunden. Weiter ist der Batterieblock 13 mit dem Ladegerät 19 verbunden. Das Ladegerät 19 ist mit dem zweiten Anschlussterminal 17 gekoppelt. Die Anpassungsschaltung 12 ist mit dem ersten Anschlussterminal 18 zur Ausgabe einer Wechselspannung gekoppelt. Die Verbindung zwischen dem Wechselrichter 12 und dem Batterieblock 13 lässt sich über ein Trennrelais 14 unterbrechen bzw. wiederherstellen. Das Trennrelais 14 ist an die Schaltvorrichtung 16 angeschlossen, wobei die Schaltvorrichtung 16 ein Schließen eines Schalters 14b zur Herstellung der Verbindung zwischen einem Anschluss des Batterieblocks 13 und einem anderen Anschluss des Wechselrichters 12 bewirkt. Der Batterieblock 13 ist mit seinem anderen Anschluss sowohl mit dem Ladegerät 19 als auch mit dem Wechselrichter 12 verbunden. In die Zuleitungen zur Betriebsanzeigevorrichtung 15 und in die elektrische Verbindung zwischen einem Anschluss des Batterieblocks 13 und dem Trennrelais 14 sind jeweils Sicherungen 12a, 12b eingefügt, die bei einem erhöhten Stromschluss den Stromfluss unterbrechen und somit weitere Schäden der elektrischen Komponenten innerhalb des mobilen Energieversorgungsgeräts 10 unterbinden.

Die Betriebsanzeigevorrichtung 15 kann einfachstenfalls einen Ein/Aus-Zustand anzeigen. Es ist jedoch auch möglich, den Spannungsstatus und/oder Ladezustand des Batterieblocks 13 anzuzeigen. Weiter ist es möglich, die Ausgangsspannung, die über das erste Anschlussterminal 18 ausgegeben wird, anzuzeigen. Das erste und zweite Anschlussterminal 18, 17 können verschiedene Steckdosen aufweisen, um eine Verwechslung zu vermeiden. Beispielsweise kann das erste Anschlussterminal 18 in Form einer Schuko-steckdose ausgebildet sein, die einen Anschluss eines normalen Schuko-Steckers ermöglicht. Das zweite Anschlussterminal 17 kann in Form einer Gerätesteckdose ausgebildet sein.

Es ist möglich, ein weiteres Anschlussterminal zur Verfügung zu stellen, welches beispielsweise eine 12V oder 24V Gleichspannung ausgibt und eine entsprechende universelle Steckdosenform aufweist.

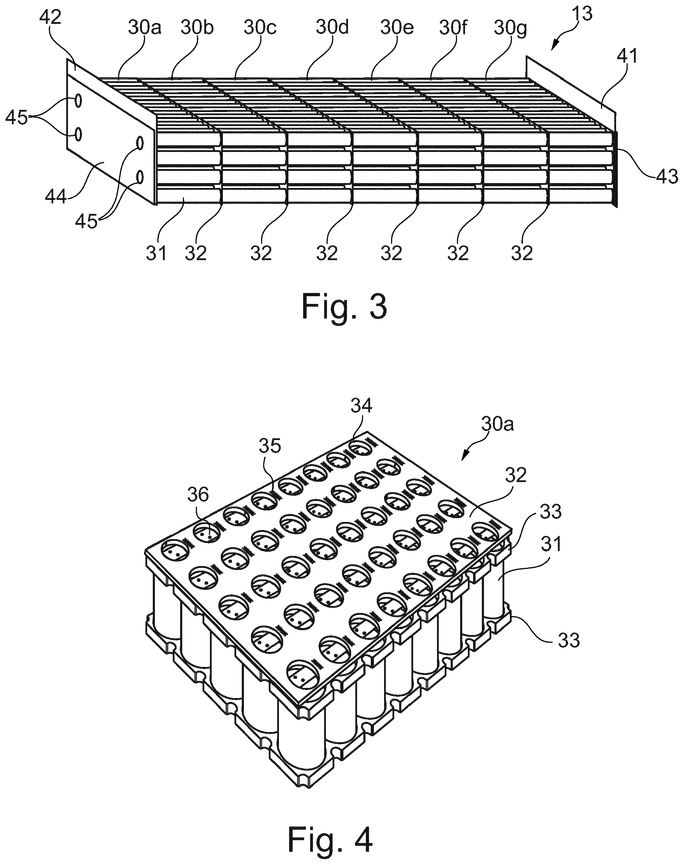

In Figur 3 ist ein erfindungsgemäßer Batterieblock 13 dargestellt. Der Batterieblock 13 umfasst hier mehrere Batteriepacks 30a bis 30g. Jedes Batteriepack enthält eine vorbestimmte Anzahl von Batteriezellen 31. Die Batteriezellen 31 sind als Rundzellen ausgebildet und weisen einen elektrisch positiven und elektrisch negativen Anschlusskontakt auf, der an gegenüberliegenden Seiten der Rundzelle ausgebildet ist. Die mehreren Batteriepacks 30a bis 30g sind derart miteinander verschaltet, dass eine Anschlussstruktur 32, die jeweils an der Ober- und an der Unterseite eines Batteriepacks 30a vorhanden ist, an einer entsprechende Anschlussstruktur 32 eines benachbarten Batteriepacks 30b anliegt, so dass ein optimaler Stromfluss zwischen den einzelnen Batteriepacks 30a, 30b möglich ist.

An den Anschlussseiten des Batterieblocks 13 sind jeweils Kontaktplatten 41 und 42 vorgesehen, die durch Isolierplatten 43 und 44 an den Außenseiten begrenzt sind. Die Kontaktplatten 41 und 42 bilden die elektrischen Anschlüsse, die in Figur 2 dargestellt sind. Die Isolierplatten 43 und 44 dienen der elektrischen Isolierung. Die einzelnen Batteriepacks 30a bis 30g werden durch Spannvorrichtungen 45 derart aneinander gepresst, dass eine zuverlässige Verbindung zwischen den einzelnen Batteriepacks 30a bis 30g ermöglicht wird. Der Aufbau des Batterieblocks 13 gemäß Figur 3 ist in seinen Außendimensionen vollständig skalierbar. D.h. der Batterieblock 13 kann einerseits an die Leistungsanforderung des mobilen Energieversorgungsgeräts angepasst werden, wobei als Begrenzung nur das Gewicht des Batterieblocks und der anderen elektrischen Komponenten beachtet werden muss. Andererseits ist eine optimale Anpassung an die Innenabmessungen des Gehäuses möglich.

In Figur 4 ist der Aufbau eines Batteriepacks 30a dargestellt. Das Batteriepack 30a weist 40 Lithium enthaltende Batteriezellen 31 auf, die jeweils in Haltestrukturen 33 eingesetzt sind. Die Haltestrukturen 33 sind aus elektrisch isolierendem Material hergestellt und dienen der Fixierung der einzelnen Batteriezellen 31, so dass ausreichend Luft zwischen den einzelnen Batteriezellen 31 zirkulieren kann und darüber hinaus ein Verrutschen der Batteriezellen 31 unterbunden wird. Auf die Haltestrukturen 33 sind jeweils Anschlussstrukturen 32 aufgelegt, wobei die nach unten gerichtete Fläche in Figur 4 analog zur nach oben gerichteten Fläche ausgestaltet ist. Die Anschlussstrukturen 32 weisen Kontaktlöcher 34 auf. Die Kontaktlöcher 34 erlauben einen Zugang zu den elektrischen Anschlusskontakten der Batteriezelle 31. Die Anschlussstruktur 32 ist mittels Anschlusselementen 36 jeweils mit den elektrischen Anschlusskontakten der Batteriezellen 31 verbunden. Dazu wird ein Anschlusselement 36 pro Batteriezelle jeweils an der zu den Batteriezellen 31 gerichteten Fläche einer Anschlussstruktur 32 befestigt und ragt jeweils in ein Kontaktloch 34 hinein. Nachdem die entsprechende Anzahl von Anschlusselementen 36 derart an der Anschlussstruktur 32 befestigt wurde, so dass die Anschlusselemente 36 jeweils in die Kontaktlöcher 34 hineinragen, wird eine elektrische Verbindung mit den elektrischen Anschlusskontakten der Batteriezellen 31 durch Öffnungen in den Haltestrukturen 33 hindurch vorgenommen, so dass eine sichere Fixierung und eine sichere elektrische Verbindung der einzelnen Batteriezellen 31 mit den Anschlussstrukturen 32 sichergestellt wird. Mit Bezug auf die Figur 3 ist erkennbar, dass ein derartiges Batteriepack 30a derart mit weiteren Batteriepacks 30b bis 30g verbunden wird, dass die jeweiligen Anschlussstrukturen 32 vollflächig aneinander liegen und somit einen optimalen Stromfluss zwischen den Batteriezellen 31 der mehreren Batteriepacks 30a bis 30g gewährleisten können, ohne dass Überhitzungen an elektrischen Zuleitungen entstehen können.

Durch die optimale Bauform der Batteriepacks 30a bis 30g und des Batterieblocks 13 lässt sich eine ausreichend hohe Energie in einem Gehäuse 11 unterbringen, so dass mit dem Batterieblock 13 über eine vorbestimmte Zeit wenigstens eine Leistung von 1kW für wenigstens zwei Stunden (2kWh) zur Verfügung gestellt werden kann. Die kann beispielsweise mit 350 Batteriezellen 31 erfolgen, wobei die Batteriezellen 31 je eine Energie von 11Wh aufweisen und eine Leistung von 5W haben.

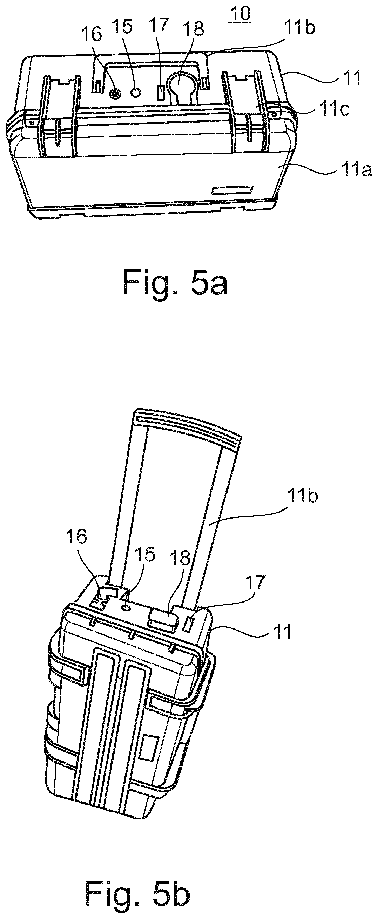

In Figur 5a und 5b sind jeweils verschiedene Ansichten und Realisierungen von Gehäuseformen des mobilen Energieversorgungsgeräts 10 dargestellt.

In Figur 5a ist das Gehäuse 11 als Koffer mit einer Unterschale 11b und einem Deckel 11a ausgebildet, wobei der Batterieblock 13 und der Wechselrichter 12 derart in dem Gehäuse 11 untergebracht sind, dass sich der Koffer öffnen lässt, um die Verschaltung zu überprüfen bzw. die elektrischen Komponenten in den Koffer einzubauen. Das Gehäuse 11 weist an seiner Frontseite einen Griff auf. Darüber hinaus ist das erste und das zweite Anschlussterminal 17 und 18 in Form von unterschiedlichen Steckdosen dargestellt. Die Schaltvorrichtung 16 ist hier als Druckschalter realisiert. In dieser Ausführungsform ist die Betriebsanzeigevorrichtung 15 als Statuslampe bzw. LED vorgesehen, die einen Einschalt- bzw. Ausschaltzustand des mobilen Energieversorgungsgeräts 10 darstellt.

Figur 5b zeigt eine alternative Ausgestaltung der Anschlussterminals 17, 18. Beispielsweise weist das erste Anschlussterminal 18 einen Deckel auf, so dass Steckdose von äußeren Einflüssen geschützt werden kann. Der Schalter 16 ist hier als Drehschalter ausgestaltet worden. Das Gehäuse 11 weist einen herausziehbaren Griff auf. Das Gehäuse 11 gemäß Figur 5b weist nicht dargestellte Rollen auf, die ein einfaches transportieren des mobilen Energieversorgungsgeräts 10 ermöglichen.

Mit dem vorliegenden mobilen Energieversorgungsgerät 10 ist es möglich, die Größe des Batterieblocks 13 und damit auch die Leistung und die vom mobilen Energieversorgungsgeräts 10 zur Verfügung gestellte Energie den Anforderungen anzupassen.

Das mobile Energieversorgungsgerät 10 kann beispielsweise über das zweite Anschlussterminal 17 bzw. ein weiteres nicht dargestelltes Anschlussterminal mit Photovoltaikelementen gekoppelt werden, die eine Spannung erzeugen, mit der die Batteriezellen 31 des Batterieblocks 13 geladen werden. Eine eventuelle Anpassung der Spannung ist mit dem Ladegerät 19 möglich. Vorzugsweise lassen sich die Photovoltaikelemente an dem Gehäuse 11 befestigen. Es ist auch möglich, die Photovoltaikelemente für den Transport in dem Gehäuse 11 zu verstauen und beim Betrieb aus dem Gehäuse 11 herauszunehmen und mit Befestigungselementen mit dem Gehäuse 11 zu verbinden. Um eine optimale Ausrichtung ausreichend grosser Photovoltaikelemente zur Sonne zu ermöglichen, können diese Elemente auch getrennt vom Energieversorgungsgerät 10 angeordnet sein, wobei in einem solchen Falle eine Zuleitung zwischen dem mobilen Energieversorgungsgerät 10 und den Photovoltaikelementen erforderlich sein kann.

## Patentansprüche

1. Mobiles Energieversorgungsgerät (10) umfassend:
ein Gehäuse (11) zur Aufnahme eines Batterieblocks (13) und einer Anpassungsschaltung (12), wobei die Anpassungsschaltung (12) als Wechselrichter (12) ausgestaltet ist und eine Gleichspannung empfängt, in eine Wechselspannung wandelt und eine sinusförmige Wechselspannung ausgibt,
ein erstes Anschlussterminal (18), das mit der Anpassungsschaltung (12) verbunden ist und zur Ausgabe der sinusförmigen Wechselspannung eingerichtet ist,
ein zweites Anschlussterminal (17), das mit dem Batterieblock (13) verbunden ist und für den Empfang einer Spannung eingerichtet ist,
eine Schaltvorrichtung (16), zum Ein oder Ausschalten des mobilen Energieversorgungsgeräts (10),
ein Ladegerät (19) zur Anpassung der über das zweite Anschlussterminal (17) zugeführten Spannung und zur Steuerung eines Ladevorgangs des Batterieblocks (13),
ein Batteriemanagementsystem (21), welches mit dem Batterieblock (13) gekoppelt ist und den Lade- und/oder Entladevorgang des Batterieblocks (13) überwacht und steuert,
**dadurch gekennzeichnet, dass**
der Batterieblock (13) aus mehreren Batteriepacks (30a-30g) zusammengesetzt ist, die in Reihe geschaltet sind, wobei jedes Batteriepack (30a-30g) wenigstens zwei Batteriezellen (31) umfasst, die als Rundzellen ausgebildet sind und parallel zueinander geschaltet sind,
jede Batteriezelle (31) einen positiven und einen negativen elektrischen Anschlusskontakt aufweist, die an gegenüberliegenden Seiten der Batteriezelle (31) angeordnet sind,
die elektrisch positiven Anschlusskontakte der Batteriezellen (31) mit einer ersten Anschlussstruktur (32) und die elektrisch negativen Anschlusskontakte der Batteriezellen (31) mit einer zweiten Anschlussstruktur (32) verbunden sind, wobei die erste und die zweite Anschlussstruktur (32) auf gegenüberliegenden Seiten des Batteriepacks (30a) angeordnet sind, und jede Anschlussstruktur (32) eine Stromfestigkeit aufweist, die der Summe der Einzelströme jeder angeschlossenen Batteriezelle (31) entspricht,
jede Batteriezelle (31) über jeweils ein Anschlusselement (36) mit der ersten Anschlussstruktur (32) und über jeweils ein weiteres Anschlusselement (36) mit der zweiten Anschlussstruktur (32) verbunden ist, wobei ein Querschnitt des jeweiligen Anschlusselements (36) an einen vorbestimmten Maximalstrom einer Batteriezelle (31) angepasst ist,
die Batteriezellen (31) eines Batteriepacks (30a-30g) in Haltestrukturen (33) eingesetzt sind, die aus elektrisch isolierendem Material hergestellt sind und der Fixierung der einzelnen Batteriezellen (31) dienen,
die Anschlussstrukturen (32) jeweils auf die Haltestrukturen (33) aufgelegt sind und Kontaktlöcher (34) aufweisen, die einen Zugang zu den elektrischen Anschlusskontakten der Batteriezellen (31) erlauben.

2. Mobiles Energieversorgungsgerät (10) nach Anspruch 1, weiter enthaltend ein Trennrelais (14), das zwischen den Batterieblock (13) und die Anpassungsschaltung (12) geschaltet ist und abhängig vom Schaltzustand der Schaltvorrichtung (16) die Verbindung zwischen Batterieblock (13) und Anpassungsschaltung (12) herstellt oder unterbricht.

3. Mobiles Energieversorgungsgerät (10) nach Anspruch 2, wobei das Trennrelais (14) einen Schalter (14b) umfasst, der in die Zuleitung vom Batterieblock (13) zur Anpassungsschaltung (12) geschaltet ist und einen Schaltkontakt (14a) der mit einem Einschaltsignal den Schalter (14b) schließt und bei einem Ausschaltsignal den Schalter (14b) öffnet.

4. Mobiles Energieversorgungsgerät (10) nach einem der vorhergehenden Ansprüche, weiter enthaltend wenigstens eine Sicherung (12a, 12b), die zwischen Batterieblock (13) und Anpassungsschaltung (12) geschaltet ist und bei einem Stromfluss über einem vorherbestimmten Stromwert die Zuleitung zur Anpassungsschaltung (12) unterbricht.

5. Mobiles Energieversorgungsgerät (10) nach einem der vorhergehenden Ansprüche, weiter enthaltend eine Betriebsanzeigevorrichtung (15) zur Anzeige wenigstens eines Betriebsstatus des mobilen Energieversorgungsgeräts (10).

6. Mobiles Energieversorgungsgerät (10) nach Anspruch 1, wobei die Anschlusselemente (36) jeweils an einer den Batteriezellen (31) zugewandten Seite der Anschlussstruktur (32) befestigt sind.

7. Mobiles Energieversorgungsgerät (10) nach Anspruch 1 oder 6, wobei die wenigstens zwei Batteriezellen (31) in einer Parallelschaltung verschaltet sind, bei der jeweils positive und negative elektrische Anschlusskontakte je einer Anschlussstruktur (32) zugeordnet sind.

8. Mobiles Energieversorgungsgerät (10) nach einem der Ansprüche 1, 6 oder 7, wobei jede Anschlussstruktur (32) aus einem elektrisch leitenden Material hergestellt und flächig ausgebildet ist, um eine gleichmäßige Stromverteilung zu allen angeschlossenen Batteriezellen (11) zu ermöglichen.

9. Mobiles Energieversorgungsgerät (10) nach einem der vorgehenden Ansprüche, wobei der Batterieblock (13) wenigstens zwei Batteriepacks (30a, 30b, 30c, 30d, 30e) umfasst, wobei jedes Batteriepack wenigstens zwei Batteriezellen (31) umfasst, wobei jeder elektrischen Anschlussseite eines Batteriepacks eine Anschlussstruktur (32) zugeordnet ist, wobei die elektrisch entgegensetzt gepolten Anschlussstrukturen (32) von zwei benachbarten Batteriepacks (30a, 30b) aneinander liegen, um eine großflächige Verbindung zwischen den Batteriepacks (30a, 30b) zu bilden.

10. Mobiles Energieversorgungsgerät (10) nach einem der vorgehenden Ansprüche, wobei das erste und zweite Anschlussterminal (17, 18), die Schaltvorrichtung (16) und die Betriebsanzeigevorrichtung (15) an einer Außenseite des Gehäuses (11) angeordnet sind.

11. Mobiles Energieversorgungsgerät (10) nach einem der vorgehenden Ansprüche, wobei dem Energieversorgungsgerät (10) Photovoltaikelemente zugeordnet sind, die bei Lichteinfall eine Spannung erzeugen, die dem Ladegerät (19) und/oder dem Batterieblock (13) zugeführt wird.

12. Mobiles Energieversorgungsgerät (10) nach einem der vorgehenden Ansprüche, wobei der Batterieblock eine Leistung grösser 1,0 kW und eine Energie grösser 2kWh aufweist, indem der Batterieblock 350 Batteriezellen (31) umfasst, die jeweils eine Energie von 11 Wh und eine Leistung von 5 W aufweisen.

13. Mobiles Energieversorgungsgerät (10) nach einem der vorgehenden Ansprüche mit mehreren Batteriepacks (30a bis 30g), wobei aneinandergrenzende Anschlussstrukturen (32) von benachbarten Batteriepacks (30a, 30b) vollflächig aneinander liegen.

14. Mobiles Energieversorgungsgerät (10) nach einem der vorhergehenden Ansprüche, wobei die Anschlusselemente (36) jeweils an der zu den Batteriezellen (31) gerichteten Fläche der Anschlussstrukturen (32) befestigt sind und durch Öffnungen in den Haltestrukturen (33) hindurch mit den Anschlusskontakten der Batteriezellen (31) elektrisch verbunden sind.

## Claims

1. Mobile power supply device (10) comprising:
a housing (11) for accommodating a battery block (13) and an adapter circuit (12), the adapter circuit (12) being designed as a DC-AC converter (12) and receiving a DC voltage, converting said DC voltage into an AC voltage and outputting a sinusoidal AC voltage,
a first connection terminal (18) which is connected to the adapter circuit (12) and is designed to output the sinusoidal AC voltage,
a second connection terminal (17) which is connected to the battery block (13) and is designed to receive a voltage,
a switching device (16) for switching the mobile power supply device (10) on or off,
a charger (19) for adapting the voltage supplied via the second connection terminal (17) and for controlling a charging process of the battery block (13),
and a battery management system (21) which is coupled to the battery block (13) and monitors and controls the charging and/or discharging process of the battery block (13),
**characterized in that**
the battery block (13) is composed of a plurality of battery packs (30a-30g) which are connected in series, each battery pack (30a-30g) comprising at least two battery cells (31) which are designed as cylindrical cells and are connected in parallel with one another,
each battery cell (31) having a positive and a negative electrical connection contact which are arranged on opposite ends of the battery cell (31),
the electrically positive connection contacts of the battery cells (31) being connected to a first connection structure (32) and the electrically negative connection contacts of the battery cells (31) being connected to a second connection structure (32), the first and the second connection structure (32) being arranged on opposite ends of the battery pack (30a), and each connection structure (32) having a current resistance which corresponds to the sum of the individual currents of each connected battery cell (31),
each battery cell (31) being connected to the first connection structure (32) by means of one connection element (36) in each case and being connected to the second connection structure (32) by means of a further connection element (36) in each case, a cross section of the particular connection element (36) being adapted to a predetermined maximum current of a battery cell (31),
the battery cells (31) of a battery pack (30a-30g) being inserted into holding structures (33) which are made of electrically insulating material and are used to fix the individual battery cells (31),
the connection structures (32) each being placed on the holding structures (33) and having contact holes (34) which allow access to the electrical connection contacts of the battery cells (31).

2. Mobile power supply device (10) according to claim 1, further comprising a cutoff relay (14) which is connected between the battery block (13) and the adapter circuit (12) and, depending on the switching state of the switching device (16), establishes or breaks the connection between the battery block (13) and adapter circuit (12).

3. Mobile power supply device (10) according to claim 2, wherein the cutoff relay (14) comprises a switch (14b) which is connected in the supply line from the battery block (13) to the adapter circuit (12), and a switch contact (14a) which closes the switch by means of a switch-on signal (14b) and opens the switch (14b) in the event of a switch-off signal.

4. Mobile energy supply device (10) according to any of the preceding claims, further comprising at least one safety fuse (12a, 12b) which is connected between the battery block (13) and the adapter circuit (12) and, in the event of a current flow above a predetermined current value, breaks the supply line to the adapter circuit (12).

5. Mobile energy supply device (10) according to any of the preceding claims, further comprising an operation display device (15) for displaying at least one operating status of the mobile energy supply device (10).

6. Mobile energy supply device (10) according to claim 1, wherein the connection elements (36) are each attached to an end of the connection structure (32) facing the battery cells (31).

7. Mobile power supply device (10) according to claim 1 or claim 6, wherein the at least two battery cells (31) are connected in a parallel circuit, in which positive and negative electrical connection contacts are each associated with a connection structure (32).

8. Mobile power supply device (10) according to any of claims 1, 6 or 7, wherein each connection structure (32) is made of an electrically conductive material and is flat to allow a uniform current distribution to all connected battery cells (11).

9. Mobile power supply device (10) according to any of the preceding claims, wherein the battery block (13) comprises at least two battery packs (30a, 30b, 30c, 30d, 30e), each battery pack comprising at least two battery cells (31), a connection structure (32) being associated with each electrical connection end of a battery pack, the electrically oppositely polarized connection structures (32) of two adjacent battery packs (30a, 30b) abutting one another in order to form a large-area connection between the battery packs (30a, 30b).

10. Mobile power supply device (10) according to any of the preceding claims, wherein the first and second connection terminals (17, 18), the switching device (16) and the operation display device (15) are arranged on an outer face of the housing (11).

11. Mobile energy supply device (10) according to any of the preceding claims, wherein photovoltaic elements are associated with the energy supply device (10), which photovoltaic elements generate a voltage when light falls thereon, which voltage is supplied to the charger (19) and/or the battery block (13).

12. Mobile energy supply device (10) according to any of the preceding claims, wherein the battery block has a power greater than 1.0 kW and an energy greater than 2 kWh by virtue of the battery block comprising 350 battery cells (31), each having an energy of 11 Wh and a power of 5 W.

13. Mobile energy supply device (10) according to any of the preceding claims having a plurality of battery packs (30a to 30g), wherein adjoining connection structures (32) of adjacent battery packs (30a, 30b) abut one another across the entire surface.

14. Mobile energy supply device (10) according to any of the preceding claims, wherein the connection elements (36) are each fastened to the surface of the connection structures (32) facing the battery cells (31) and are electrically connected to the connection contacts of the battery cells (31) through openings in the holding structures (33).

## Revendications

1. Appareil mobile d'alimentation en énergie (10) incluant :
un boîtier (11) pour recevoir un bloc de batterie (13) et un circuit d'adaptation (12), dans lequel le circuit d'adaptation (12) est configuré comme un onduleur (12) et reçoit une tension continue, la convertit en tension alternative et délivre en sortie une tension alternative sinusoïdale,
une première borne de raccordement (18) reliée au circuit d'adaptation (12) et conçue pour délivrer en sortie la tension alternative sinusoïdale,
une seconde borne de raccordement (17) reliée au bloc de batterie (13) et conçue pour recevoir une tension,
un dispositif de commutation (16) pour mettre en marche ou arrêter l'appareil mobile d'alimentation en énergie (10),
un chargeur (19) pour ajuster la tension fournie par l'intermédiaire de la seconde borne de raccordement (17) et pour commander une opération de charge du bloc de batterie (13),
un système de gestion de batterie (21) couplé au bloc de batterie (13) et qui surveille et commande l'opération de charge et/ou de décharge du bloc de batterie (13),
**caractérisé en ce que**
le bloc de batterie (13) est assemblé à partir de plusieurs ensembles de batterie (30a-30g) raccordés en série, dans lequel chaque ensemble de batterie (30a-30g) inclut au moins deux éléments de batterie (31) réalisés sous forme d'éléments ronds et raccordés les uns aux autres en parallèle,
chaque élément de batterie (31) comporte un contact de raccordement électrique positif et un contact de raccordement électrique négatif qui sont agencés sur des côtés opposés de l'élément de batterie (31),
les contacts de raccordement électriquement positifs des éléments de batterie (31) sont reliés à une première structure de raccordement (32) et les contacts de raccordement électriquement négatifs des éléments de batterie (31) sont reliés à une seconde structure de raccordement (32), dans lequel les première et seconde structures de raccordement (32) sont agencées sur des côtés opposés de l'ensemble de batterie (30a), et chaque structure de raccordement (32) a une capacité de charge qui correspond à la somme des courants individuels de chaque élément de batterie (31) raccordé,
chaque élément de batterie (31) est respectivement relié à la première structure de raccordement (32) par l'intermédiaire d'un élément de raccordement (36) et à la seconde structure de raccordement (32) par l'intermédiaire d'un élément de raccordement supplémentaire (36), dans lequel une section de l'élément de raccordement (36) respectif est adaptée à un courant maximal prédéfini d'un élément de batterie (31),
les éléments de batterie (31) d'un ensemble de batterie (30a-30g) sont utilisés dans des structures de support (33) fabriquées à partir d'un matériau électriquement isolant et servent à fixer les éléments de batterie (31) individuels,
les structures de raccordement (32) sont respectivement appliquées sur les structures de support (33) et comportent des trous de contact (34) qui permettent d'accéder aux contacts de raccordement électriques des éléments de batterie (31).

2. Appareil mobile d'alimentation en énergie (10) selon la revendication 1, contenant en outre un relais de coupure (14) intercalé entre le bloc de batterie (13) et le circuit d'adaptation (12), et qui établit ou coupe la liaison entre le bloc de batterie (13) et le circuit d'adaptation (12) indépendamment de l'état de commutation du dispositif de commutation (16).

3. Appareil mobile d'alimentation en énergie (10) selon la revendication 2, dans lequel le relais de coupure (14) inclut un commutateur (14b) intercalé dans la ligne d'alimentation du bloc de batterie (13) au circuit d'adaptation (12) et un contact de commutation (14a) qui ferme le commutateur (14b) avec un signal de mise en marche et ouvre le commutateur (14b) avec un signal d'arrêt.

4. Appareil mobile d'alimentation en énergie (10) selon l'une des revendications précédentes, contenant en outre au moins un fusible (12a, 12b) intercalé entre le bloc de batterie (13) et le circuit d'adaptation (12), et qui coupe la ligne d'alimentation du circuit d'adaptation (12) lorsqu'un courant en circulation est supérieur à une valeur de courant prédéfinie.

5. Appareil mobile d'alimentation en énergie (10) selon l'une des revendications précédentes, contenant en outre un dispositif d'affichage de fonctionnement (15) pour afficher au moins un état de fonctionnement de l'appareil mobile d'alimentation en énergie (10).

6. Appareil mobile d'alimentation en énergie (10) selon la revendication 1, dans lequel les éléments de raccordement (36) sont respectivement fixés sur un côté de la structure de raccordement (32) dirigé vers les éléments de batterie (31).

7. Appareil mobile d'alimentation en énergie (10) selon la revendication 1 ou 6, dans lequel les au moins deux éléments de batterie (31) sont interconnectés dans un montage parallèle, dans lequel des contacts de raccordement électriques positifs et négatifs sont chacun respectivement associés à une structure de raccordement (32).

8. Appareil mobile d'alimentation en énergie (10) selon l'une des revendications 1, 6 ou 7, dans lequel chaque structure de raccordement (32) est fabriquée à partir d'un matériau électriquement conducteur et réalisée de manière plate afin de permettre une distribution de courant uniforme à tous les éléments de batterie (11) raccordés.

9. Appareil mobile d'alimentation en énergie (10) selon l'une des revendications précédentes, dans lequel le bloc de batterie (13) inclut au moins deux ensembles de batterie (30a, 30b, 30c, 30d, 30e), dans lequel chaque ensemble de batterie inclut au moins deux éléments de batterie (31), dans lequel une structure de raccordement (32) est associée à chaque côté de raccordement électrique d'un ensemble de batterie, dans lequel les structures de raccordement (32) à polarité électriquement opposée de deux ensembles de batterie (30a, 30b) voisins sont l'une contre l'autre afin de former un raccordement à grande surface entre les ensembles de batterie (30a, 30b).

10. Appareil mobile d'alimentation en énergie (10) selon l'une des revendications précédentes, dans lequel les première et seconde bornes de raccordement (17, 18), le circuit de commutation (16) et le dispositif d'affichage de fonctionnement (15) sont agencés sur un côté extérieur du boîtier (11).

11. Appareil mobile d'alimentation en énergie (10) selon l'une des revendications précédentes, dans lequel des éléments photovoltaïques sont associés à l'appareil d'alimentation en énergie (10), lesquels éléments photovoltaïques génèrent, en présence d'une lumière incidente, une tension qui est fournie au chargeur (19) et/ou au bloc de batterie (13).

12. Appareil mobile d'alimentation en énergie (10) selon l'une des revendications précédentes, dans lequel le bloc de batterie a une puissance supérieure à 1,0 kW et une énergie supérieure à 2 kWh, le bloc de batterie incluant 350 éléments de batterie (31) ayant respectivement une énergie de 11 Wh et une puissance de 5 W.

13. Appareil mobile d'alimentation en énergie (10) selon l'une des revendications précédentes, comportant plusieurs ensembles de batterie (30a à 30g), dans lequel des structures de raccordement (32) adjacentes d'ensembles de batterie (30a, 30b) voisins sont toutes les unes contre les autres.

14. Appareil mobile d'alimentation en énergie (10) selon l'une des revendications précédentes, dans lequel les éléments de raccordement (36) sont respectivement fixés sur la surface des structures de raccordement (32) orientée vers les éléments de batterie (31), et sont électriquement reliés aux contacts de raccordement des éléments de batterie (31), à travers des ouvertures situées dans les structures de support (33).
